# EUROPEAN PATENT SPECIFICATION

(11) **EP 1 973 733 B1**
(45) Date of publication and mention of the grant of the patent: **31.10.2012**
(21) Application number: 07712034.3
(22) Date of filing: 15.01.2007
(51) Int. Cl.: B32B 7/02, B32B 27/32, B32B 27/20, B32B 5/18, B32B 5/32

(54) **MULTILAYER LAMINATED FILM**
MEHRSCHICHTLAMINATFOLIE
FILM STRATIFIÉ MULTICOUCHE

(30) Priority: 24.01.2006 IT PD20060022
(43) Date of publication of application: 01.10.2008
(73) Proprietor: Amcor Flexibles Italia S.R.L., 36030 Lugo Di Vicenza (VI) (IT)
(72) Inventor: DELLA TORRE, Andrea, I-21052 Busto Arsizio (IT); ZAGGIA, Carlo, Alberto, I-36100 Vicenza (IT)
(74) Representative: Modiano, Micaela Nadia
(86) International application number: PCT/EP2007/050331
(87) International publication number: WO 2007/085543

(56) References cited:
- WO-A-00/12305
- WO-A-03/079316
- DE-U1-202005 002 615
- US-A- 5 043 040
- US-A- 5 800 913
- US-A1- 2003 059 597

## Description

### Technical Field

The present invention relates to a multilayer laminated film.

### Background Art

Multilayer laminated films are currently known and widespread, particularly but not exclusively in the field of food packaging, which are generally supplied in rolls and are used to produce preformed bags and other similar packaging for foods.

These preformed bags are obtained from a portion of multilayer laminated film by cutting, folding and sealing along its edges.

Known multilayer laminated films are constituted generally by at least two layers.

At least one first layer is made of plastic material, and two facing portions thereof are suitable to be mutually heat-sealed so as to provide the sealed edges of the bag or the like.

There is also at least one second outer layer made of a material selected among plastic material, metallic material, paper-like material or equivalents.

Each layer is coupled to the adjacent one by means of an interlayer made of adhesive material.

If the process for packaging the food in the preformed bag entails subjecting the filled bag to a high-temperature thermal treatment which is suitable to affect the food to change some of its characteristics, such as for example in pasteurization and sterilization, then the first heat-sealing layer of the multilayer film must be capable of performing certain functions even after said thermal treatment.

First of all, the first heat-sealing layer must ensure, during the packaging or formation of the bag, sealing properties which ensure the perfect tightness of the package.

Sealing is obtained generally by superimposing two flaps of the same film which is appropriately folded and by applying to such superimposed flaps such a pressure and temperature as to cause the partial melting of the layers of the two adjacent flaps which are in mutual contact and therefore cause their complete heat-sealing.

The first heat-sealing layer must therefore ensure the tightness of such heat-sealed flaps during and after the thermal treatment intended for the food contained inside the bag.

Moreover, the film must have such a dimensional and shape stability as to not undergo deformation during the thermal treatment and must have a mechanical rigidity which does not compromise the functionality of the bag formed with it.

Moreover, such laminated multilayer film must have, even after the thermal treatment for the food, the ability to act as a barrier against gases such as for example oxygen.

Finally, the multilayer film can have such characteristics as to allow easy opening on the part of a consumer of the bag made of such film, said bag being therefore generally prepared so as to have technological solutions which improve its tearability in specific regions which a consumer is required to handle in order to open it.

Currently known multilayer films used for the packaging of bags for food intended to undergo high-temperature thermal treatments generally comprise a first heat-sealing layer made of polypropylene, a second central layer made of aluminum, and a third outer layer made of oriented polyester which is optionally printed, said layers being coupled in pairs by means of an interlayer made of adhesive material.

However, such known films can be improved.

In particular, the need arises to make the rolls that carry said films as light and compact as possible, so as to save on the transport and storage costs of such rolls.

Likewise, it is preferable that the bags produced with said films be as light as possible, to the full advantage of the buyer of the final product packaged therein but also of the intermediate user who produces the bags and packages the food with them and subsequently ships the packaged product to the distribution sites.

### Disclosure of the Invention

The aim of the present invention is to provide a multilayer laminated film which is intended to undergo a high-temperature thermal treatment which is suitable to act on the food arranged inside a bag or other similar package obtained with said film, which has capabilities, functionalities and characteristics which are not lower than those of known types of film but is lighter than such known films.

Within this aim, an object of the present invention is to provide a multilayer film which is cheaper than known films.

Another object of the present invention is to provide a multilayer laminated film which can be used to produce bags and other similar packages by means of known forming and heat-sealing processes which are already used for known types of film.

Another object of the present invention is to provide a multilayer laminated film which has tearability characteristics which allow easier opening of the bag produced with it.

Another object of the present invention is to provide a multilayer laminated film which can be manufactured cheaply with known systems and technologies.

This aim and these and other objects, which will become better apparent hereinafter, are achieved by a multilayer laminated film, particularly for the packaging of food which must undergo a high-temperature thermal treatment after packaging has at least partly occurred, of the type which comprises at least two layers, of which at least one first layer is made of plastic material and is intended for heat-sealing and at least one second outer layer is made of a material selected among plastic material, metallic material, and paper-like materials, each layer being coupled to the adjacent one by means of an interlayer made of adhesive material, said multilayer laminated film being characterized in that said first heat-sealing layer is constituted by one or more sublayers, at least one of which is of the type with a cavitated structure.

### Brief Description of the Drawings

Further characteristics and advantages of the invention will become better apparent from the following detailed description of two preferred but not exclusive embodiments thereof, illustrated by way of non-limiting example in the accompanying drawings, wherein:
Figure 1 is a sectional view of a first embodiment of a laminated film according to the invention;
Figure 2 is a sectional view of a second embodiment of a multilayer laminated film according to the invention.

### Ways of carrying out the Invention

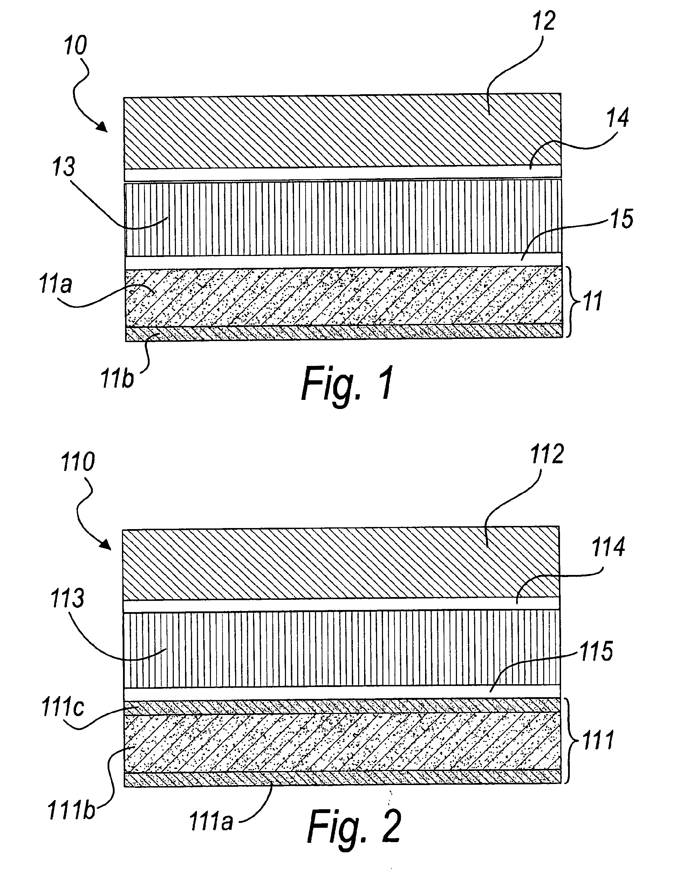

With reference to the figures, a multilayer laminated film according to the invention is generally designated by the reference numeral 10 in the first embodiment of Figure 1.

The film 10, in the embodiment shown schematically by the cross-section of Figure 2, comprises three layers, designated by the reference numerals 11, 12 and 13 respectively.

The first layer 11 is made of plastic material and is adapted to cooperate with the heat-sealing of two facing parts of the film during the formation of the bag or of another similar package.

Two portions of the first heat-sealing layer 11, when placed in mutual contact and both subjected to such a pressure and temperature as to cause their at least partial melting, in fact provide the heat-seal.

The second outer layer 12 is made of a material selected among plastic material, metallic material, paper-like material or equivalents.

The third layer 13 is interposed between the first layer 11 and the second layer 12, is made of metallic material or plastic material, and is joined to each of the adjacent first and second layers 11, 12 by means of an interlayer made of adhesive material 14 and 15.

The third layer 13 is preferably made of aluminum.

The first layer 11 is constituted, in the first embodiment described here, by two sublayers 11a and 11b, both of which have a cavitated structure.

The first layer 11 is produced by means of a multilayer extrusion process, during which the sublayers 11a and 11b are enriched with one or more inert additives.

The process for coextrusion of the sublayers 11a and 11b is followed by an operation for mono- or biaxial stretching, of a per se known type, of the first coextruded layer 11, which is suitable to give the first layer 11 improved mechanical and tearability qualities.

The operation for stretching the first heat-sealing layer 11, together with the presence of an inert additive within its structure, allows to form cavities inside the first layer 11, such as to reduce its density.

Moreover, the presence of an inert additive, together with the cavitated structure of the first layer 11, reduces the tearing resistance in such layer, so as to ensure that the entire film 10 has as a whole a reduced resistance to tearability.

Moreover, if, as known, the stretching process is performed in a preferential direction, the resulting film has tearability characteristics in a direction which is substantially parallel to the stretching direction, such as to ensure easier and convenient opening of the bag for the end user.

At the same time, however, known types of cavitated film generally have characteristics of heat-sealability and dimensional stability in case of thermal treatment at high temperature, such as pasteurization and sterilization, which are insufficient to ensure their applicability in the production of preformed bags; the cavitated structure in fact generally increases the risk of internal tearing of the cavitated film.

The dimensional stability at high temperatures of the cavitated layer 11 allows, differently from what occurs for known types of cavitated film, to use the film 10 according to the invention to produce bags and other similar enclosures for packaging precooked ready-to-eat foods, which must undergo, when already stored within such a bag or other similar enclosure, thermal processes such as pasteurization, sterilization or the like.

The process for producing the cavitated layer 11, and in particular the annealing process which follows the mono- or biaxial stretching step, allows for example to observe dimensional shrinkage phenomena at high temperatures on the order of 3%, much smaller than the dimensional shrinkage of approximately 20% observed commonly in known types of cavitated film.

In order to obviate the drawback of the reduced heat-sealing capabilities of known cavitated films, which are indeed due to the presence of those very additives which reduce the weight of the layer to which they belong but facilitate its tearing (their reduced heat-sealing capabilities becoming more evident indeed during high-temperature thermal treatments), a cavitated heat-sealing layer 11 has been devised which is constituted in turn by several sublayers.

The outermost of said sublayers has a quantity of additives such as to ensure heat-sealing, during the packaging or formation of the bag, with sealing properties which ensure the perfect tightness of the bag.

The innermost sublayer instead has such an amount of additive as to make it as light as possible in relation to its mechanical characteristics, which the heat-sealing layer 11 as a whole must in any case ensure.

The inert additive is calcium carbonate or another equivalent additive, which is incompatible with the polymeric matrix of the layer 11.

The amount of additive of the internal sublayer 11a can vary between 1% and 50% by weight, with a preferential value of 30%.

The amount of additive of the outer sublayer 11b is less than 50% by weight and is even nil if the outer sublayer 11b is not cavitated, with a preferential value of 20%.

The first layer 11 has a thickness comprised between 30 and 120 microns, with a preferred value of 70 microns and a density between 0.400 and 0.880 g per cubic centimeter, with a preferred value of 0.700 g/cm³, in contrast with a density of approximately 0.900 g/cm³ of the equivalent layers of known films.

This density, which is lower than the density that generally characterizes known multilayer films having a similar application, allows, for an equal performance of the film 10 with respect to known films, both to have a lighter package and to have rolls of film which are lighter and less onerous to transport.

The thickness, which is lower than the thicknesses with which cavitated layers are generally used, allows to have rolls of film according to the invention which are not only lighter but also have a larger surface of wound film for an equal space occupation with respect to a film roll of the known type.

As mentioned, the heat-sealing properties of the first layer 11 are ensured by the outer sublayer 11b, which has an amount of inert additive which is smaller or nil, such as to consequently reduce the presence of cavitated areas.

The outer sublayer 11b therefore has heat-sealing properties which allow the first layer 11, lightened by the cavitated structure, to ensure a heat-sealing quality which is not lower than that of known films.

The inner cavitated sublayer 11a also can cooperate with the heat-sealing or, in particular cases, even act as a heat-sealing layer.

For example, in another embodiment of the invention, the inner sublayer 11a, which has a greater degree of cavitation, may have a melting point which is lower than, or equal to, the melting point of the outer sublayer 11b, with a reduced degree of cavitation.

Because of this, during heat-sealing and in said heat-sealing regions, not only do the facing outer adjacent sublayers 11b melt, but the inner sublayers 11a also melt at least partially, with a consequent reduction, up to disappearance, of the cavitated structure in said heat-sealing regions.

In this manner, in the heat-sealing regions a heat-sealing layer 11 is obtained, after heat-sealing has occurred, which is more compact and has reduced internal fragility, to the advantage of the quality of the heat-seal and of the tightness of the bag.

For example, the heat-sealing layer 11 can be constituted by an inner sublayer 11 a with a melting point between 140°C and 150°C and an outer sublayer 11b with a melting point between 150°C and 165°C.

In the embodiment of the invention described here merely by way of non-limiting example, the first layer 11 is constituted, as mentioned, by two sublayers 11a and 11b, each of which is made of a plastic material selected between polypropylene or polyethylene.

Therefore, the sublayers can be both made of polypropylene or both made of polyethylene, or one can be made of polypropylene and the other can be made of polyethylene.

The first layer 11 can also be composed of more than two sublayers, preferably but not exclusively three, each of which contains a different percentage of one or more inert additives; this allows to achieve a different degree of cavitation in the individuals sublayers, so as to obtain a product which has the required application characteristics.

In a second embodiment of the invention, whose schematic cross-section is shown in Figure 2, the film 110 according to the invention has the first layer 111 composed of three sublayers, a first outer sublayer 111a, a second intermediate sublayer 111b, and a third inner sublayer 111c.

The percentage by weight of additive in each of the three sublayers is variable according to requirements and properties to be given to the film 110.

In this embodiment also, the third layer 113 is preferably made of aluminum.

The second outer layer 12 and 112 is made of a plastic material selected among oriented polyethylene terephthalate, oriented polypropylene or oriented polyamide.

If compared with known films used in such applications, the present invention provides the following advantages:
- the process for producing the cavitated film ensures higher rigidity of the cavitated film and in general such an improvement of the mechanical properties as to allow the use of films which are thinner compared with known solutions,
- the presence of cavitated areas in the film reduces its density, with considerable benefits on production costs, on the final weight of the bag and on its environmental impact,
- the use of one or more additives which are inert and incompatible with the polymeric matrix and the consequent stretching operation provide reduced resistance to tearing with respect to known films,
- further, the very combination of the stretching operation and of the presence of inert additives allows to obtain a film according to the invention with reduced tearing resistance in a preferential direction, for example a longitudinal direction in the case of monoaxial stretching,
- the properties that are fundamental in this field of application, such as thermal stability and heat-sealability, are not reduced with respect to known films.

The invention also relates to the use of a multilayer laminated film according to the invention as described above in its various embodiments and other possible equivalent embodiments for the production of bags and other similar enclosures for packaging precooked ready-to-eat food which must undergo, when already stored within one of said bags or the like, thermal processes such as pasteurization, sterilization and the like.

The invention further relates to the use of a multilayer laminated film according to the invention as described above, in its various embodiments and other possible equivalent embodiments, to produce bags and other similar enclosures which have a reduced resistance to linear tearing in a preferential direction, to be used again to package precooked ready-to-eat food which must undergo thermal processes such as pasteurization, sterilization and the like.

In practice it has been found that the invention thus described solves the intended aim and objects.

In particular, the present invention provides a multilayer laminated film which has capabilities, functionalities and characteristics which are not lower than those of known types of film but is lighter than such films, thanks to the use of a cavitated oriented layer instead of a normal mono- or biaxially-oriented non-cavitated layer made of plastic material.

Further, the present invention provides a multilayer film which is cheaper than known films.

Moreover, the present invention provides a multilayer laminated film which can be used to produce bags and other similar packaging by means of known forming and heat-sealing processes which are already used for known types of film.

Moreover, the present invention provides a multilayer laminated film which has improved tearability characteristics with respect to known films, such as to allow easier opening of the bag.

Moreover, the present invention provides a multilayer laminated film which can be manufactured cheaply with known systems and technologies.

In practice, the materials employed, so long as they are compatible with the specific use, as well as the dimensions, may be any according to requirements and to the state of the art.

## Claims

1. A multilayer laminated film of the type which comprises at least two layers (11, 111, 12, 112, 13, 113), of which at least one first layer (11, 111) is made of plastic material and is adapted to be heat-seated and at least one second outer layer (12, 112) is made of a material selected among plastic material, metallic material, and paper materials, each layer being coupled to the adjacent one by means of an interlayer made of adhesive material (14, 15), said first hest-sealing layer (11, 111) is constituted by at least two sublayers (11a, 11b, 111a, 111b, 111c), at least one of which is of the type with a cavitated structure, **characterized in that** said first layer (11, 111) with cavitated structure is constituted by at least two sublayers (11a, 11b, 111a, 111b, 111c), which are produced by means of a multilayer coextrusion process and are enriched during said coextrusion process with one or more inert additives which are incompatible with the polymeric matrix, said coextrusion process being followed by an operation for mono- or biaxially-oriented stretching of said first extruded layer (11, 111).

2. The multilayer laminated film according to claim 1, **characterized in that** said inert additive is calcium carbonate.

3. The multilayer laminated film according to the preceding claims, **characterized in that** said inert additive is present in the internal sublayer (11a) in an amount comprised between 1% and 50% by weight, with a preferred amount equal to 30% by weight.

4. The multilayer laminated film according to one or more of the preceding claims, **characterized in that** said inert additive is present in the outer sublayer (11b) in an amount which is lower than 50% by weight, with a preferred amount equal to 20% by weight,

5. The multilayer laminated film according to one or more of the preceding claims, **characterized in that** the inner sublayer (11a) has a higher degree of cavitation with respect to said outer sublayer (11b) and a melting point which is lower than, or equal to, the melting point of the outer sublayer (11b).

6. The multilayer laminated film according to one or more of the preceding claims, **characterized in that** the heat-sealing layer (11) is constituted by an inner sublayer (11a) with a melting point between 140°C and 150°C and by an outer sublayer (11b) with a melting point between 150°C and 165°C.

7. The multilayer laminated film according to the preceding claims, **characterized in that** the density of said first layer (11, 111) having a cavitated structure is comprised between 0.400 and 0.880 grams per cubic centimeter, with a preferred density of 0.700 grams per cubic centimeter.

8. The multilayer laminated film according to the preceding claims, **characterized in that** said first layer (11, 111), which is stretched mono- or biaxially, has a thickness comprised between 30 and 120 microns, with a preferred thickness of 70 microns.

9. The multilayer laminated film according to the preceding claims, **characterized in that** at least one of said sublayers (11a, 11b, 111a, 111b, 111c) which compose said first heat-sealing layer (11, 111) has heat-sealing properties.

10. The multilayer laminated film according to one or more of the preceding claims, **characterized in that** said first layer (11), which is coextruded and oriented, is constituted by two sublayers (11a, 11b), each of which is made of a plastic material selected between polypropylene and polyethylene.

11. The multilayer laminated film according to one or more of the preceding claims, **characterized in that** said first layer (111), which is coextruded and oriented, is constituted by three sublayers (111a, 111b, 111c), each of which is made of a plastic material selected between polypropylene and polyethylene.

12. The multilayer laminated film according to one or more of the preceding claims, **characterized in that** said second outer layer (12, 112) is made of a plastic material selected among oriented polyethylene terephthalate, oriented polypropylene or oriented polyamide.

13. The multilayer laminated film according to one or more of the preceding claims, **characterized in that** it comprises, interposed between said first layer (11, 111) and said second layer (12, 112), a third layer (13, 113) made of metallic material or plastic material, which is joined to each of the adjacent first (11, 111) and second (12, 112) layers by means of an interlayer made of adhesive material (14, 15).

14. The multilayer laminated film according to one or more of the preceding claims, **characterized in that** said third layer (13, 113) is made of aluminum.

15. Use of a multilayer laminated film comprising at least two layers (11, 12, 13, 111, 112, 113), of which at least one first layer (11, 111), made of plastic material, is intended for heat-sealing, and at least one second outer layer (12, 112), is made of a material selected among plastic material, metallic material, and paper-like materials, in which each layer is coupled to the adjacent one by means of an interlayer made of adhesive material (14, 15) and wherein the heat-sealing layer (11, 111) is constituted by at least two sublayers (11a, 11b, 111a, 111b, 111c), at least one of which is of the type with cavitated structure, as defined in one or more of the preceding claims, for producing bags and other similar enclosures for packaging precooked ready-to-eat food which has to undergo, when already stored within one of said bags or the like, thermal processes such as pasteurization, sterilization.

16. The multilayer laminated film according to the preceding claims, **characterized in that** said mono- or biaxial stretching step is followed by an annealing step in order to contain dimensional shrinkage at high temperatures.

## Patentansprüche

1. Mehrschichtlaminatfolie von der Art, die wenigstens zwei Schichten (11, 111, 12, 112, 13, 113) umfasst, von denen wenigstens eine erste Schicht (11, 111) aus Kunststoff hergestellt ist und sich zum Heißsiegeln eignet und wenigstens eine zweite, äußere Schicht (12, 112) aus einem Material hergestellt ist, das unter Kunststoff, metallischem Werkstoff und Papiermaterialien ausgewählt ist, wobei jede Schicht mit der benachbarten mittels einer Zwischenschicht aus Klebstoff (14, 15) verbunden ist, wobei die erste Heißsiegelschicht (11, 111) von wenigstens zwei Teilschichten (11a, 11b, 111a, 111b, 111c) gebildet wird, von denen wenigstens eine von der Art mit einer kavitierten Struktur ist, **dadurch gekennzeichnet, dass** die erste Schicht (11, 111) mit kavitierter Struktur von wenigstens zwei Teilschichten (11a, 11b, 111a, 111b, 111c) gebildet wird, die mittels eines Mehrschicht-Koextrusionsverfahrens erzeugt werden und während des Koextrusionsverfahrens mit einem oder mehreren inerten Additiven angereichert werden, die mit der Polymermatrix inkompatibel sind, wobei auf das Extrusionsverfahren ein Arbeitsgang zum mono- oder biaxial orientierten Recken der extrudierten ersten Schicht (11, 111) folgt.

2. Mehrschichtlaminatfolie nach Anspruch 1, **dadurch gekennzeichnet, dass** das inerte Additiv Calciumcarbonat ist.

3. Mehrschichtlaminatfolie nach den vorhergehenden Ansprüchen, **dadurch gekennzeichnet, dass** das inerte Additiv in der inneren Teilschicht (11a) in einer Menge zwischen 1 und 50 Gew.-% vorliegt, mit einer bevorzugten Menge von 30 Gew.%.

4. Mehrschichtlaminatfolie nach einem oder mehreren der vorhergehenden Ansprüche, **dadurch gekennzeichnet, dass** das inerte Additiv in der äußeren Teilschicht (11b) in einer Menge vorliegt, die geringer ist als 50 Gew.-%, mit einer bevorzugten Menge von 20 Gew.-%.

5. Mehrschichtlaminatfolie nach einem oder mehreren der vorhergehenden Ansprüche, **dadurch gekennzeichnet, dass** die innere Teilschicht (11a) einen höheren Kavitationsgrad als die äußere Teilschicht (11b) aufweist und einen Schmelzpunkt besitzt, der niedriger als oder gleich dem Schmelzpunkt der äußeren Teilschicht (11b) ist.

6. Mehrschichtlaminatfolie nach einem oder mehreren der vorhergehenden Ansprüche, **dadurch gekennzeichnet, dass** die Heißsiegelschicht (11) von einer inneren Teilschicht (11a) mit einem Schmelzpunkt zwischen 140°C und 150°C und von einer äußeren Teilschicht (11b) mit einem Schmelzpunkt zwischen 150°C und 165°C gebildet wird.

7. Mehrschichtlaminatfolie nach den vorhergehenden Ansprüchen, **dadurch gekennzeichnet, dass** die Dichte der ersten Schicht (11, 111) mit einer kavitierten Struktur zwischen 0,400 und 0,880 Gramm pro Kubikzentimeter beträgt, mit einer bevorzugten Dichte von 0,700 Gramm pro Kubikzentimeter.

8. Mehrschichtlaminatfolie nach den vorhergehenden Ansprüchen, **dadurch gekennzeichnet, dass** die erste Schicht (11, 111), die mono- oder biaxial gereckt ist, eine Dicke zwischen 30 und 120 Mikrometern aufweist, mit einer bevorzugten Dicke von 70 Mikrometern.

9. Mehrschichtlaminatfolie nach den vorhergehenden Ansprüchen, **dadurch gekennzeichnet, dass** wenigstens eine der Teilschichten (11a, 11b, 111a, 111b, 111c), welche die erste Heißsiegelschicht (11, 111) bilden, Heißsiegeleigenschaften besitzt.

10. Mehrschichtlaminatfolie nach einem oder mehreren der vorhergehenden Ansprüche, **dadurch gekennzeichnet, dass** die erste Schicht (11), die koextrudiert und orientiert ist, von zwei Teilschichten (11a, 11b) gebildet wird, von denen jede aus einem Kunststoff, ausgewählt unter Polypropylen und Polyethylen, hergestellt ist.

11. Mehrschichtlaminatfolie nach einem oder mehreren der vorhergehenden Ansprüche, **dadurch gekennzeichnet, dass** die erste Schicht (111), die koextrudiert und orientiert ist, von drei Teilschichten (111a, 111b, 111c) gebildet wird, von denen jede aus einem Kunststoff, ausgewählt unter Polypropylen und Polyethylen, hergestellt ist.

12. Mehrschichtlaminatfolie nach einem oder mehreren der vorhergehenden Ansprüche, **dadurch gekennzeichnet, dass** die zweite, äußere Schicht (12, 112) aus einem Kunststoff, ausgewählt unter orientiertem Polyethylenterephthalat, orientiertem Polypropylen oder orientiertem Polyamid, hergestellt ist.

13. Mehrschichtlaminatfolie nach einem oder mehreren der vorhergehenden Ansprüche, **dadurch gekennzeichnet, dass** sie, angeordnet zwischen der ersten Schicht (11, 111) und der zweiten Schicht (12, 112), eine dritte Schicht (13, 113) aus metallischem Werkstoff oder Kunststoff umfasst, die mit jeder der benachbarten ersten (11, 111) und zweiten (12, 112) Schichten mittels einer Zwischenschicht aus Klebstoff (14, 15) verbunden ist.

14. Mehrschichtlaminatfolie nach einem oder mehreren der vorhergehenden Ansprüche, **dadurch gekennzeichnet, dass** die dritte Schicht (13, 113) aus Aluminium hergestellt ist.

15. Verwendung einer Mehrschichtlaminatfolie, die wenigstens zwei Schichten (11, 12, 13, 111, 112, 113) umfasst, von denen wenigstens eine erste Schicht (11, 111), hergestellt aus Kunststoff, zum Heißsiegeln bestimmt ist und wenigstens eine zweite, äußere Schicht (12, 112) aus einem Material hergestellt ist, das unter Kunststoff, metallischem Werkstoff und papierähnlichen Werkstoffen ausgewählt ist, wobei jede Schicht mit der benachbarten mittels einer Zwischenschicht aus Klebstoff (14, 15) verbunden ist und wobei die Heißsiegelschicht (11, 111) von wenigstens zwei Teilschichten (11a, 11b, 111a, 111 b, 111 c) gebildet wird, von denen wenigstens eine von der Art mit kavitierter Struktur ist, wie in einem oder mehreren der vorhergehenden Ansprüche definiert, zur Herstellung von Beuteln und anderen ähnlichen Hüllen zur Verpackung vorgegarter verzehrfertiger Nahrungsmittel, die, wenn sie bereits in einem dieser Beutel oder dergleichen verwahrt sind, thermischen Verfahren wie Pasteurisierung, Sterilisierung unterzogen werden müssen.

16. Mehrschichtlaminatfolie nach den vorhergehenden Ansprüchen, **dadurch gekennzeichnet, dass** auf den Schritt des mono- oder biaxialen Reckens ein Schritt des Temperns folgt, um die dimensionale Schrumpfung bei hohen Temperaturen in Grenzen zu halten.

## Revendications

1. Film stratifié multicouche du type qui comprend au moins deux couches (11, 111, 12, 112, 13, 113), dont au moins une première couche (11, 111) est constituée de matière plastique et est destinée au thermoscellage et au moins une deuxième couche externe (12, 112) est constituée d'un matériau choisi parmi une matière plastique, une matière métallique et des matières de type papier, chaque couche étant couplée à la couche adjacente au moyen d'une intercouche constituée d'une matière adhésive (14, 15), ladite première couche de thermoscellage (11, 111) étant constituée par au moins deux sous-couches (11a, 11b, 111a, 111b, 111c), dont au moins une est du type avec une structure à cavités, **caractérisé en ce que** ladite première couche (11, 111) avec une structure à cavités est constituée par au moins deux sous-couches (11a, 11b, 111a, 111b, 111c), qui sont produites au moyen d'un procédé de coextrusion multicouche et sont enrichies pendant ledit procédé de coextrusion avec un ou plusieurs additifs inertes qui sont incompatibles avec la matrice polymère, ledit procédé de coextrusion étant suivi par une opération pour étirage mono- ou bi-axialement orienté de ladite première couche extrudée (11, 11).

2. Film stratifié multicouche selon la revendication 1, **caractérisé en ce que** ledit additif inerte est le carbonate de calcium.

3. Film stratifié multicouche selon les revendications précédentes, **caractérisé en ce que** ledit additif inerte est présent dans la sous-couche interne (11a) dans une quantité comprise entre 1 % et 50 % en poids, une quantité préférée étant égale à 30 % en poids.

4. Film stratifié multicouche selon une ou plusieurs des revendications précédentes, **caractérisé en ce que** ledit additif inerte est présent dans la sous-couche externe (11b) dans une quantité qui est inférieure à 50 % en poids, une quantité préférée étant égale à 20 % en poids.

5. Film stratifié multicouche selon une ou plusieurs des revendications précédentes, **caractérisé en ce que** la sous-couche interne (11a) a un degré de cavitation plus élevé par rapport à ladite sous-couche externe (11b) et un point de fusion qui est inférieur ou égal au point de fusion de la sous-couche externe (11b).

6. Film stratifié multicouche selon une ou plusieurs des revendications précédentes, **caractérisé en ce que** la couche de thermoscellage (11) est constituée par une sous-couche interne (11a) avec un point de fusion compris entre 140°C et 150 °C et par une sous-couche externe (11b) avec un point de fusion compris entre 150°C et 165 °C.

7. Film stratifié multicouche selon les revendications précédentes, **caractérisé en ce que** la masse volumique de ladite première couche (11, 111) ayant une structure à cavités est comprise entre 0,400 et 0,880 gramme par centimètre cube, une masse volumique préférée étant de 0,700 gramme par centimètre cube.

8. Film stratifié multicouche selon les revendications précédentes, **caractérisé en ce que** ladite première couche (11, 111), qui est étirée mono- ou bi-axialement, a une épaisseur comprise entre 30 et 120 microns, une épaisseur préférée étant de 70 microns.

9. Film stratifié multicouche selon les revendications précédentes, **caractérisé en ce que** au moins l'une desdites sous-couches (11a, 11b, 111a, 111b, 111c), qui composent ladite première couche de thermoscellage (11, 111) a des propriétés de thermoscellage.

10. Film stratifié multicouche selon une ou plusieurs des revendications précédentes, **caractérisé en ce que** ladite première couche (11), qui est coextrudée et orientée, est constituée par deux sous-couches (11a, 11b), dont chacune est constituée d'une matière plastique choisie parmi le poly(propylène) et le poly(éthylène).

11. Film stratifié multicouche selon une ou plusieurs des revendications précédentes, **caractérisé en ce que** ladite première couche (111), qui est coextrudée et orientée, est constituée par trois sous-couches (111a, 111b, 111c), dont chacune est constituée d'une matière plastique choisie parmi le poly(propylène) et le poly(éthylène).

12. Film stratifié multicouche selon une ou plusieurs des revendications précédentes, **caractérisé en ce que** ladite seconde couche externe (12, 112) est constituée d'une matière plastique choisie parmi le poly(téréphtalate d'éthylène) orienté, le poly(propylène) orienté ou le poly(amide) orienté.

13. Film stratifié multicouche selon une ou plusieurs des revendications précédentes, **caractérisé en ce qu'**il comprend, interposée entre ladite première couche (11, 111) et ladite deuxième couche (12, 112), une troisième couche (13, 113) constituée d'une matière métallique ou d'une matière plastique, qui est jointe à chacune des première (11, 111) et deuxième (12, 112) couches adjacentes au moyen d'une intercouche constituée d'une matière adhésive (14, 15).

14. Film stratifié multicouche selon une ou plusieurs des revendications précédentes, **caractérisé en ce que** ladite troisième couche (13, 113) est constituée d'aluminium.

15. Utilisation d'un film stratifié multicouche comprenant au moins deux couches (11, 12, 13, 111, 112, 113), dont au moins une première couche (11, 111) est constituée de matière plastique et est destinée au thermoscellage et au moins une deuxième couche externe (12, 112) est constituée d'un matériau choisi parmi une matière plastique, une matière métallique et des matières de type papier, chaque couche étant couplée à la couche adjacente au moyen d'une intercouche constituée d'une matière adhésive (14, 15), et où la couche de thermoscellage (11, 111) est constituée par au moins deux sous-couches (11a, 11b, 111a, 111b, 111c), dont au moins une est du type avec une structure à cavités, selon une ou plusieurs des revendications précédentes, pour produire des sacs ou d'autres enveloppes similaires pour emballer un aliment prêt à manger précuit qui doit subir, lorsqu'il est déjà stocké dans l'un desdits sacs ou similaires, des procédés thermiques tels que pasteurisation et stérilisation.

16. Film stratifié multicouche selon les revendications précédentes, **caractérisé en ce que** ladite étape d'étirage mono- ou bi-axial est suivie par une étape de recuit afin de contenir un retrait dimensionnel à des températures élevées.
